# EUROPEAN PATENT APPLICATION

(11) **EP 2 927 458 A1**
(43) Date of publication of application: **07.10.2015**
(21) Application number: 14163558.1
(22) Date of filing: 04.04.2014
(51) Int. Cl.: F02B 19/12, F02B 19/18, F02M 21/02

(54) **Pre-chamber with flow transfer passages**

(71) Applicant: Caterpillar Energy Solutions GmbH, 68167 Mannheim (DE)
(72) Inventor: Stellwagen, Karl, 67227 Frankenthal (DE)
(74) Representative: Kramer Barske Schmidtchen Patentanwälte PartG mbB

(57) **Abstract**

The present disclosure relates to a pre-chamber (24) for a gaseous fuel internal combustion engine. Particularly, a pre-chamber body (22) may comprise the pre-chamber (24) including a pre-chamber axis (A), and a riser passage (26) opening in the pre-chamber (24). The pre-chamber body (22) may further comprise a plurality of flow transfer passages (28) opening in the riser passage (26) for fluidly connecting the main combustion chamber (8) and the riser passage (26). The plurality of flow transfer passages (28) may be asymmetrically arranged about the pre-chamber axis (A). Additionally or alternatively, a first flow transfer passage (28C) may have a smaller flow cross-sectional area than a second flow transfer passage (28).

## Description

### Technical Field

The present disclosure generally relates to a pre-chamber of an engine cylinder. More particularly, the present disclosure relates to a pre-chamber fluidly connected via a plurality of flow transfer passages to a main combustion chamber of an internal combustion engine.

### Background

Gaseous fuel internal combustion engines powered with a lean mixture of gaseous fuel and air may comprise a pre-combustion chamber (also referred to as pre-chamber) per cylinder for ignition purposes. Particularly, large-bore engines may benefit from those pre-chambers as it is otherwise difficult to consistently achieve complete and thorough combustion using lean fuel air mixtures.

In certain configurations, such a pre-chamber is fluidly connected to a main combustion chamber of a respective cylinder via a riser passage and, typically, a plurality of flow transfer passages. Those flow transfer passages allow flow of the lean mixture of gaseous fuel and air from the main combustion chamber into the pre-chamber during a compression stroke. Enrichment of the lean mixture in the pre-chamber is typically effected by providing a small quantity of gaseous fuel into the pre-chamber via a separate gas feed passage during the intake stroke. The enriched mixture is ignited in the pre-chamber by an igniter such as a spark plug. Ignition of the enriched mixture causes a flame front of hot gases that propagates from the pre-chamber via the flow transfer passages into the main combustion chamber. Thus, the lean mixture in the main combustion chamber ignites and bums, and, thereby, expands against a movable piston that drives a crankshaft.

For example, US Patent 5,024,193 of Caterpillar Inc. discloses a fuel combustion system with a pre-combustion chamber assembly defining a pre-chamber. The pre-chamber has a pre-selected shape and volume. A plurality of ejection passages of pre-selected geometric cross-section is provided for directing and controllably expanding burning gases from the pre-chamber into a main combustion chamber at a velocity greater than speed of sound.

The present disclosure is directed, at least in part, to improving or overcoming one or more aspects of prior systems.

### Summary of the Disclosure

According to an aspect of the present disclosure, a pre-chamber body for a gaseous fuel internal combustion engine including a main combustion chamber is disclosed. The pre-chamber body may comprise a pre-chamber including a pre-chamber axis, and a riser passage opening in the pre-chamber. The pre-chamber body may further comprise a plurality of flow transfer passages opening in the riser passage for fluidly connecting the main combustion chamber and the riser passage. The plurality of flow transfer passages may be asymmetrically arranged about the pre-chamber axis, and/or a first flow transfer passage of the plurality of flow transfer passages may have a smaller flow cross-sectional area than a second flow transfer passage of the plurality of flow transfer passages.

The pre-chamber body may comprise an ignition device configured as a spark plug, a laser igniter, an ignition fuel injector or a glow plug. The ignition device may be operably connected to the pre-chamber for igniting a pre-chamber mixture.

A gaseous fuel engine may be an engine which uses gaseous fuel only, but may also be an engine designed to use another fuel alternative and/or parallel to gaseous fuel.

According to another aspect of the present disclosure, a gaseous fuel internal combustion engine is disclosed. The gaseous fuel internal combustion engine may comprise a cylinder, a piston reciprocatingly arranged in the cylinder, and a pre-chamber body as exemplary disclosed herein.

According to yet another aspect of the present disclosure, a method for operating a gaseous fuel internal combustion engine is disclosed. The method may comprise providing a gaseous fuel internal combustion engine as exemplary disclosed herein. The method may further comprise, during a compression stroke, pushing a lean mixture of gaseous fuel and air from the main combustion chamber via the flow transfer passages into the riser passage, thereby, generating a defined flow disturbance in an overall flow through the riser passage due the asymmetric arrangement of the flow transfer passages, and/or due to the smaller size in the flow cross-sectional area of the first flow transfer passage compared to the second flow transfer passage.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic drawing of an upper section of an engine cylinder covered by a cylinder head only shown in part as well, the cylinder head comprising a pre-combustion chamber assembly;
Fig. 2 is a schematic drawing of a bottom view of the pre-combustion chamber assembly of Fig. 1 along line I to I;
Fig. 3 is a schematic drawing of a bottom view of another embodiment of the pre-combustion chamber assembly of Fig. 1 along line I to I; and
Fig. 4 is a schematic drawing of a bottom view of yet another embodiment of the pre-combustion chamber assembly of Fig. 1 along line I to I.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a symmetric arrangement of equally sized flow transfer passages of a pre-combustion assembly results in a labile equilibrium for a generated flow from the flow transfer passages into the riser passage, and, thus, into the pre-chamber. The reason is that even smallest undesired flow disturbances may disturb the labile flow equilibrium in the riser passage and may lead to an undefined flow in the riser passage, into the pre-chamber, and/or within the pre-chamber. Thus, mixing with gaseous fuel in the pre-chamber may be deteriorated and, hence, ignition in the pre-chamber may be negatively affected.

Therefore, it is proposed to arrange and/or configure the flow transfer passages in a manner that generates a desired, preferably small, "disturbance" resulting in a defined and foreseeable stable flow in the riser passage, into the pre-chamber, and/or within the pre-chamber. Thus, occurrence of undefined flow states in the riser passage, into the pre-chamber, and/or within the pre-chamber due to further undesired flow disturbances may be reduced.

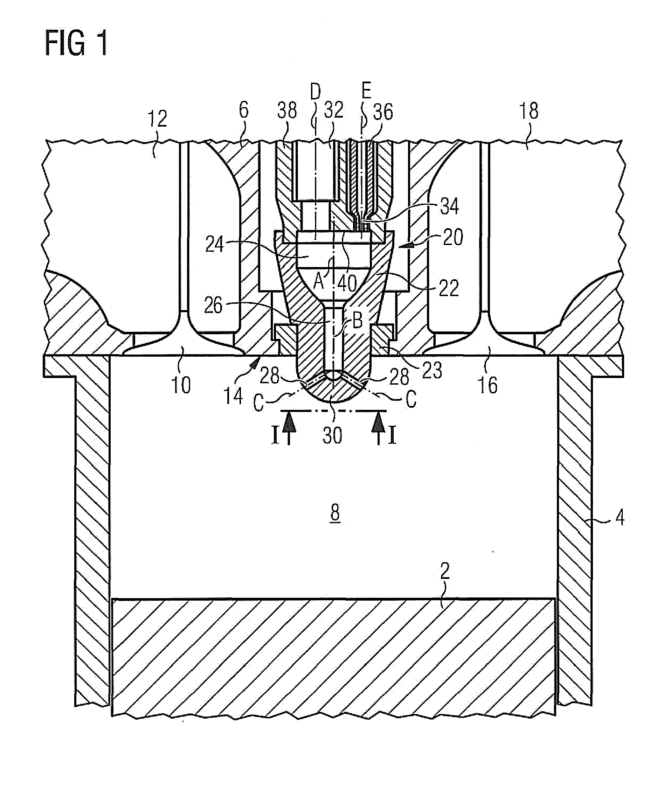

Referring now to the drawings to explain the general principle of the present disclosure by way of example. Fig. 1 depicts a piston 2 arranged in a cylinder 4 of a gaseous fuel internal combustion engine (not shown in further detail). Cylinder 4 is covered by a cylinder head 6. Piston 2, cylinder 4, and cylinder head 6 together delimit a main combustion chamber 8 of the engine.

Piston 2 is reciprocatingly arranged in cylinder 4 to travel between a top dead center (TDC) and a bottom dead center (BDC) during operation of the internal combustion engine. For the purposes of the present disclosure, the internal combustion engine is considered as a four-stroke gaseous fuel internal combustion engine, in which the pre-chamber assembly and cylinder head as disclosed herein are particularly applicable. One skilled in the art will recognize, however, that the internal combustion engine may be any type of engine (turbine, gas, diesel, natural gas, propane, two-stroke, etc.) that would utilize the pre-chamber assembly as disclosed herein. Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

Cylinder head 6 includes at least one inlet valve 10, for example a poppet valve. Inlet valve 10 is accommodated in an inlet channel 12 opening in a piston sided face 14 of cylinder head 6 for supplying a lean mixture of gaseous fuel and air into combustion chamber 8. Similarly, at least one outlet valve 16, for example also a poppet valve, is accommodated in an outlet channel 18 of cylinder head 6 to guide exhaust gas out of combustion chamber 8.

Cylinder head 6 further comprises a pre-combustion chamber assembly 20 with a pre-chamber body 22 mounted in cylinder head 6 via a mounting body 23. Alternatively, pre-combustion chamber assembly 20 and/or pre-chamber body 22 may be mounted in and/or integrated in cylinder head 6 in any other fashion.

Pre-chamber body 22 includes a pre-chamber 24 extending along a pre-chamber axis A. For example, pre-chamber 24 may have a volume within a range between 0.5 % and 3 % of a clearance volume of cylinder 4. Pre-chamber 24 is funnel-shaped and tapers in direction to a riser passage 26. Alternatively, pre-chamber 24 may have any other shape such as a cylindrical shape, pyramidal shape, conical shape, and combinations thereof.

Riser passage 26 longitudinally extends in pre-chamber body 22, and opens in pre-chamber 24. Particularly, riser passage 26 smoothly transitions into a bottom section of pre-chamber 24. In the shown configuration of Fig. 1, a riser passage axis B of riser passage 26 is aligned with pre-chamber axis A. Alternatively, riser passage axis B may run parallel to pre-chamber axis A, or may confine an angle with pre-chamber axis A.

To fluidly connect riser passage 26 and main combustion chamber 8, a plurality of flow transfer passages 28 is provided, two of which are shown in Fig. 1. Flow transfer passages 28 extend through tip 30 of pre-chamber body 22 along respective flow passage axes C, which may run inclined to pre-chamber axis A, for example, within a range from 10° to 90°. Specifically, each flow transfer passage 28 fluidly connects a bottom section of riser passage 26 and a top section of main combustion chamber 8.

Tip 30 may be dome-shaped as indicated in Fig. 1, or may be flattened or otherwise curved. In some embodiments, tip 30 may reach into main combustion chamber 8, or may be arranged in a cavity provided in face 14 of cylinder head 6.

In the shown embodiment of Fig. 1, flow transfer passages 28 extend through tip 30 about an angle with respect to a radial direction regarding pre-chamber axis A. In other embodiments, flow transfer passages 28 may, for example, extend through tip 30 about an angle with respect to a tangential direction regarding a circle around pre-chamber axis A.

Further, in the shown embodiment of Fig. 1, flow transfer passages 28 have a substantial constant flow cross sectional area along their length in the shape of a circle, an oval, a rectangle, or any other suitable cross-sectional shape. In other embodiments, flow cross sectional areas of individual flow transfer passages 28 may vary. For example, flow transfer passages 28 may taper from one or both end sections in direction to a middle section of flow transfer passage 28.

Still further, in the shown configuration, flow transfer passages 28 transition step-like into riser passage 26 and an outer face of tip 30, respectively. Alternatively, for example, flow transfer passages may include chamfers, roundings, or funnel-shaped sections at the transition into riser passage 26 and/or the outer face of tip 30.

In some embodiments, at least one flow transfer passage 28 may extend in a direction about an angle to a tangential direction with respect to a circle around pre-chamber axis A. The remaining flow transfer passages 28 may extend about an angle to a radial direction with respect to pre-chamber axis A.

As is described in greater detail later on, arrangement and/or configuration of flow transfer passages 26 is such that a defined flow disturbance is generated in riser passage 26, instead of a labile flow equilibrium as in symmetric arrangements and configurations.

An ignition device 32, for example a spark plug, a laser igniter, an ignition fuel injector, or a glow plug, is operably connected to pre-chamber 24. Operably connected as used herein means that ignition device 32 is - depending on its ignition mechanism - configured and arranged to ignite an ignitable mixture in pre-chamber 24. For example, in case ignition device 32 is a spark plug, electrodes of the same may reach into pre-chamber 24 such that a spark between those electrodes ignites a mixture in pre-chamber 24. As another example, in case ignition device 32 is a laser igniter, the same may be separated from the pre-chamber via a window that is configured to transmit a laser beam from said laser igniter into pre-chamber 24.

In some embodiments, pre-chamber 24 may be integrated in or directly mounted to ignition device 32. For example, pre-chamber body 22 may be at least partially formed with ignition device 32 for mounting into cylinder head 6 as a single part.

In the shown embodiment of Fig. 1, an ignition device axis D of ignition device 32 runs parallel to pre-chamber axis A. Alternatively, ignition device 32 may be arranged such that ignition device axis D intersects with, or is aligned with pre-chamber axis A.

Further, a gas feed passage 34 opens in pre-chamber 24 for supplying gaseous fuel or a rich mixture of gaseous fuel and air into pre-chamber 24. Gas feed passage 34 may be part of gas feed valve 36 (only shown in part in Fig. 1 without valve member), or may be separately provided. Again, a gas feed passage axis E of gas feed passage 34 may either run parallel to pre-chamber axis A as depicted in Fig. 1, or may intersect with, or may be aligned with pre-chamber axis A in other configurations.

In some embodiments, ignition device 32 and/or gas feed valve 36 are disposed in a sleeve 38 fixed to pre-chamber body 22. As depicted, a pre-chamber sided face 40 of sleeve 38 may function as cover for pre-chamber 24.

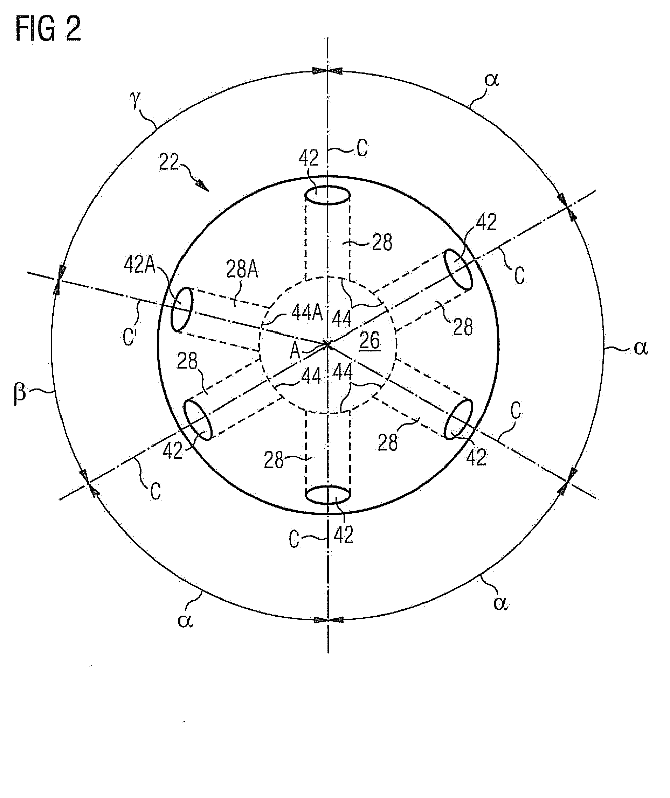

Referring to Fig. 2, tip 30 of pre-chamber body 22 is shown viewed in direction of pre-chamber axis A as indicated by line I to I in Fig. 1.

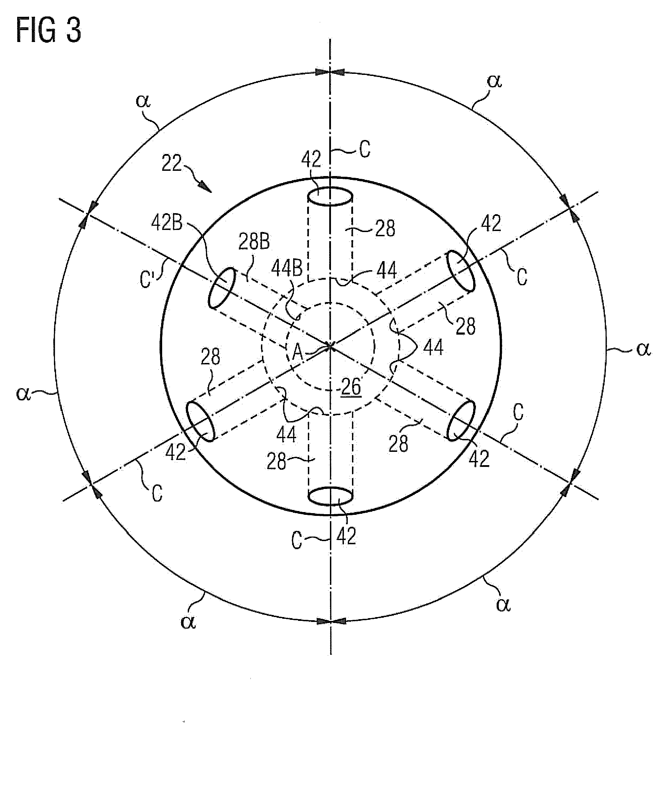

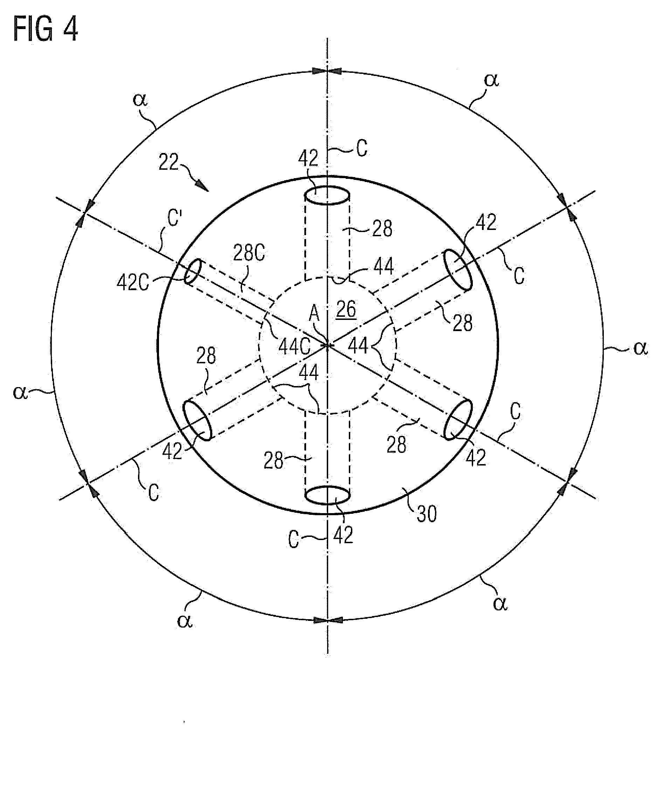

In the shown configuration of Fig. 2, in total six flow transfer passages 28 extend through tip 30 along respective flow transfer passage axes C. In Fig. 2 (and Figs. 3, 4), flow transfer passages 28 are indicated by dashed lines as those passages are not visible from the outside. Each flow transfer passage 28 extends between a respective main combustion chamber opening 42 and a respective riser passage opening 44 in riser passage 26 (indicated by a dashed circle in Fig. 2). In other embodiments, more or less flow transfer passages may be provided, for example within a range between four and twelve.

As depicted, main combustion chamber openings 42 and riser passage openings 44 may be distributed azimuthally with respect to pre-chamber axis A, and/or riser passage axis B.

Flow transfer passages 28 are asymmetrically arranged about pre-chamber axis A in that flow transfer passages 28 are arranged non-equidistantly to one another. Particularly, due to position and extension of flow transfer passage 28A, main combustion chamber opening 42A and riser passage opening 44A of the same are arranged non-equidistantly with respect to neighboring main combustion chamber openings 42 and riser passage openings 44, respectively. As a result, main combustion chamber openings 42 are arranged asymmetric about pre-chamber axis A, and riser passage openings 44 are arranged asymmetric about pre-chamber axis A.

Specifically, neighboring flow transfer passage axes A confine angles between one another (referred to as α, β, and γ in Fig. 2). As can be seen, flow transfer passage 28A is positioned such that respective flow transfer passage axis C' confines angles β and γ with neighboring axes C, wherein angles β and γ are unequal to angle α confined between remaining flow transfer passages 28. For example, angle β may be at least 2° smaller than angle α. Accordingly, for instance, in a configuration including in total six flow transfer passages, angle α may be about 60°, angle β may be about 58°, and angle γ may be about 62°, thus summing up to 360°.

Additionally, at least one further flow transfer passage may confine angles with neighboring flow transfer passages 28 other than in a symmetric arrangement including equal angles confined between neighboring flow transfer passages 28.

It is noted that differently dimensioned angles between neighboring flow transfer passage axes C may be also obtained by arranging a first flow transfer passage such that a respective first flow transfer passage axis C confines a different angle with a radial plane about pre-chamber axis A compared to a second flow transfer passage axis C of a second flow transfer passage. In other words, the first flow transfer passage may be more or less inclined with respect to pre-chamber axis A than the second flow transfer passage.

Generally, by positioning at least one main combustion chamber opening 42 and/or at least one riser passage opening 44 at a position other than in a symmetric arrangement of flow transfer passages, a direction of flow through that respective flow transfer passage 28 is changed, which cause a defined and desired disturbance during inflow into riser passage 26.

Referring to Fig. 3, a further embodiment of tip 30 with flow transfer passages 28 is shown, again, viewed in direction of pre-chamber axis A as indicated by line I to I in Fig. 1

Here, flow transfer passages 28 are asymmetrically arranged about pre-chamber axis A in that opening 44B of flow transfer passage 28B is disposed closer to pre-chamber axis A compared to openings 44 of flow transfer passages 28. As a result, openings 44, 44B are arranged non-equidistantly with respect to pre-chamber axis A.

Specifically, a bottom section of riser passage 26 may taper to its bottom end (as can be seen in Fig. 1), and consequently includes sections with different diameters as schematically indicted in Fig. 3 by two concentric dashed circles. Riser passage opening 44B of flow transfer passage 28B is disposed in a section of riser passage 26 having a smaller diameter than another section of riser passage 26 in which riser passage openings 44 are disposed.

In the shown embodiment, angles α between neighboring flow transfer passage axes C are equally sized, for example having a value of 60° in configurations with six flow transfer passages 28 as shown in Fig. 3. Alternatively, angels between neighboring flow transfer passage axes may vary, for example similar to the embodiment described in connection with Fig. 2.

Again, by positioning the riser passage openings non-equidistantly with respect to pre-chamber axis A, a defined and desired disturbance during inflow into riser passage 26 is generated.

In Fig. 4, an embodiment in which a first flow transfer passage has a smaller flow cross-sectional area than the other flow transfer passages is shown.

Specifically, flow transfer passage 28C has a smaller flow cross-sectional area compared to remaining flow transfer passages 28. Thus, flow through flow transfer passage 28C is reduced, which, again, causes a nonuniform inflow into riser passage 26. Additionally, at least one further flow transfer passage may include a comparatively small flow cross sectional area.

In the embodiment shown in Fig. 4, flow transfer passages 28 have a constant flow cross-sectional area. Alternatively, at least one flow transfer passage may include one or more tapered sections. In those embodiments, flow cross sectional area of said tapering flow transfer passage as used herein may relate to a minimum flow cross-section area of the same. That minimum flow cross sectional area may be disposed at any position along the flow transfer passage length, for example at a main combustion chamber opening, a middle section, and/or a riser passage opening of the respective flow transfer passage.

One skilled in the art will appreciate, that the embodiments discussed in connection with Figs. 2 to 4 may be combined. For example, flow transfer passages 28 may be arranged asymmetric about pre-chamber axis A, and at least one of those flow transfer passages 28 may include a reduced flow cross sectional area.

### Industrial Applicability

The pre-combustion chamber assembly and cylinder head as generically disclosed herein are applicable in reciprocating piston engines. Particularly, the pre-combustion chamber assembly and cylinder head are useable with gaseous fuel internal combustion engines running on a lean mixture of gaseous fuel and air.

During an intake stroke, a lean mixture of gaseous fuel and air is supplied via inlet channel 12 into main combustion chamber 8. Consecutively, during a compression stroke, that lean mixture of gaseous fuel and air from main combustion chamber 8 is pushed via flow transfer passages 28 into riser passage 26, and from there into pre-chamber 24.

Due to the asymmetric arrangement and/or configuration of flow transfer passages 28, the lean mixture does not uniformly flow from individual flow transfer passages 28 into riser passage 26 in terms of direction, flow rate, and/or position of entry into riser passage 26. Thus, a defined disturbance is generated in the flow. That defined and desired flow disturbance leads to an overall flow in riser passage 26, which is fed by each flow transfer passage 28, that is more stable compared to a flow resulting from a uniform inflow through symmetrically arranged and configured flow transfer passages. Particularly, that stable flow in riser passage 26, into pre-chamber 24, and/or within pre-chamber 24 may better cope with further undefined and undesired disturbances compared to a flow generated by a uniform inflow that merely leads to a labile equilibrium.

As riser passage 26 longitudinally extends between pre-chamber 24 and flow transfer passages 28, a stable flow with the defined disturbance forms as described above. The lean mixture from combustion chamber 8 flows into pre-chamber 24, which is or was further supplied with gaseous fuel or a rich mixture of gaseous fuel and air via gas feed passage 34. The pre-chamber mixture including the lean mixture from main combustion chamber 8 and the gaseous fuel or rich mixture from gas feed passage 34 is ignited by ignition device 32. A resulting flame front propagates through riser passage 26 and flow transfer passages 28 into main combustion chamber 8.

Although the preferred embodiments of this invention have been described herein, improvements and modifications may be incorporated without departing from the scope of the following claims.

## Claims

1. A pre-chamber body (22) for a gaseous fuel internal combustion engine including a main combustion chamber (8), the pre-chamber body (22) comprising:
a pre-chamber (24) including a pre-chamber axis (A);
a riser passage (26) opening in the pre-chamber (24);
a plurality of flow transfer passages (28) opening in the riser passage (26) for fluidly connecting the main combustion chamber (8) and the riser passage (26), wherein
the plurality of flow transfer passages (28) is asymmetrically arranged about the pre-chamber axis (A); and/or
a first flow transfer passage (28C) of the plurality of flow transfer passages (28) has a smaller flow cross-sectional area than a second flow transfer passage of the plurality of flow transfer passages (28).

2. The pre-chamber body (22) of claim 1, further comprising a gas feed passage (34) opening in the pre-chamber (24).

3. The pre-chamber body (22) of claim 1 or 2, wherein the flow transfer passages (28) extend along respective flow transfer passage axes (C), and the flow transfer passage axes (C) are asymmetrically arranged around the pre-chamber axis (A).

4. The pre-chamber body (22) of any one of the preceding claims, wherein each flow transfer passage (28) extend between respective main combustion chamber openings (42) and respective riser passage openings (44), and wherein the main combustion chamber openings (42) and/or the riser passage openings (44) are arranged asymmetrically about the pre-chamber axis (A).

5. The pre-chamber body (22) of any one of the preceding claims, wherein the main combustion chamber openings (42) and/or the riser passage openings (44) are arranged non-equidistantly with respect to the pre-chamber axis (A).

6. The pre-chamber body (22) of any one of the preceding claims, wherein the main combustion chamber openings (42) and/or the riser passage openings (44) are arranged non-equidistantly with respect to one another.

7. The pre-chamber body (22) of any one of the preceding claims, wherein the flow transfer passages (28) extend along respective flow transfer passage axes (C), and wherein at least one flow transfer passage axis (C) is inclined more or less with respect to the pre-chamber axis (A) compared to at least one other flow transfer passage axis (C) of another flow transfer passage (28).

8. The pre-chamber body (22) of any one of the preceding claims, wherein
the riser passage (26) smoothly transitions into the pre-chamber (24); and/or
the riser passage (26) includes a riser passage axis (B) that is aligned with, runs parallel to, or intersects with the pre-chamber axis (A).

9. The pre-chamber body (22) of any one of the preceding claims, further comprising a gas feed valve (36) fluidly connected upstream of the gas feed passage (34).

10. The pre-chamber body (22) of any one of the preceding claims, wherein the flow transfer passages (28) have a substantial constant flow cross-sectional area along a respective flow transfer passage axis (C).

11. The pre-chamber body (22) of any one of the preceding claims, wherein the flow transfer passages (28) extend along respective flow transfer passage axes (C), and the flow transfer passage axes (C) run inclined with respect to the pre-chamber axis (A).

12. A spark plug comprising a pre-chamber body (22) of any one of the preceding claims.

13. A cylinder head (6) comprising a pre-chamber body (22) of any one of claims 1 to 11.

14. A gaseous fuel internal combustion engine comprising:
a cylinder (4);
a piston (2) reciprocatingly arranged in the cylinder (4); and
a pre-chamber body (22) of any one claims 1 to 11.

15. A method for operating a gaseous fuel internal combustion engine, the method comprising:
providing a gaseous fuel internal combustion engine according to claim 14;
during a compression stroke, pushing a lean mixture of gaseous fuel and air from the main combustion chamber (8) via the flow transfer passages (28) into the riser passage (26), thereby, generating a defined flow disturbance in an overall flow through the riser passage (26) due the asymmetric arrangement of the flow transfer passages (28), and/or due to the smaller size in the flow cross-sectional area of the first flow transfer passage compared to the second flow transfer passage.
